# EUROPEAN PATENT APPLICATION

(11) **EP 1 693 997 A2**
(43) Date of publication of application: **23.08.2006**
(21) Application number: 06300142.4
(22) Date of filing: 16.02.2006
(51) Int. Cl.: H04L 12/46, H04L 29/12

(54) **Interworking from Internet Protocol to virtual private LAN service**

(30) Priority: 16.02.2005 US 58274
(71) Applicant: Alcatel, 75008 Paris (FR)
(72) Inventor: Lee, Cheng-Yin, Ottawa, Ontario K2B 6A5 (CA)
(74) Representative: Hervouet, Sylvie

(57) **Abstract**

Systems and methods for using VPLS to provide communications between IP devices connected to a provider service network (PSN) by a non-Ethernet access link and IP devices connected to a PSN by an Ethernet access link are described. In accordance with the systems and methods standard IP devices connected to existing and heterogeneous access technologies can communicate with each other as if they were connected to a common LAN segment. In particular the invention relates to the interworking of IP and VPLS.

## Description

### Field of the Invention

This invention relates to heterogeneous digital access technologies and more particularly to systems and methods for existing heterogeneous technologies to communicate with each other as if they were connected to a common Local Area Network (LAN).

### Background

Typically, provider service networks (PSN) are used to allow multiple end users to communicate with each other in a virtual private network (VPN) or a virtual private LAN service (VPLS) environment using the Internet Protocol (IP). Ethernet access is frequently the technology of choice for PSNs but there are occasions in which it may be advantageous for other technologies to be accessed. These other technologies may include point to point access systems such as Frame Relay (FR) and Asynchronous Transfer Mode (ATM).

The present application describes how standard IP devices connected to existing and heterogeneous access technologies can communicate with each other as if they were connected to a common LAN segment. In particular, it describes the interworking of IP and VPLS.

More particularly the application illustrates the interface between IP over X (where X is non-Ethernet) and VPLS, with examples of how a CE router with point-to-point interface such as Frame Relay or ATM access can appear as a node on the emulated LAN. This allows a CE to work with other CEs as if it is connected to the same LAN as the other CEs. Only one data link connection identifier (DLCI) is required at a CE router with FR access to allow it to peer with other routers with Ethernet or FR/ATM access. This reduces the amount of provisioning required by end customers. For instance, instead of provisioning m point-to-point DLCIs and m subnets for routers to peer, an end customer only need one DLCI or Ethernet interface and an IP address for one subnet on a router, to allow the router to peer with other routers on the emulated LAN. When a new site is added, only the new router needs to be provisioned and only one DLCI or one Ethernet interface is required. It is to be noted that the need for only one DLCI or Ethernet link does not prevent additional access interfaces to be used for redundancy if desired.

There is only limited prior art relating to the interworking of IP and VPLS. In one example, a provider has converted FR customers to their own Ethernet-based TLS service (effectively an ATM -based VPLS) with some success. But one of their biggest challenges has been to extend their TLS service to a remote FR endpoint. In order to meet this challenge they are usually required to run protocols such as IRB, which may not be available or it may be complicated to enable at customer's site. Alternatively, it requires a costly dedicated CO-based conversion router which tends to be much more expensive than providing this feature natively in a VPLS PE.

As indicated previously, only one DLCI is required at a CE router with FR access to allow it to peer with other routers with Ethernet or FR/ATM. It reduces the amount of provisioning required by end customers. For instance, instead of provisioning m point-to-point DLCIs and m subnets for routers to peer, an end customer only need one DLCI or Ethernet interface and an IP address for one subnet on a router, to allow the router to peer with other routers on the emulated LAN. When a new site is added, only the new router need to be provisioned and only one DLCI or one Ethernet interface is required. This feature is analogous to converting a FR site to IP-VPN. However this feature is different from the above IP-VPN analogy in that traffic is bridged instead of routed and does not require a routing protocol between CE and PE.

Another prior art example is known as ARP-MEDIATION but it addresses the p2p inter-working of Ethernet and FR/ATM (any p2p access) for IP traffic and supports only one Ethernet node on the Ethernet interface end. The present invention allows more than one Ethernet nodes on the Ethernet interface (as defined for Ethernet)

In another prior art example, known as IPLS, only bridged encapsulation (or encapsulated Ethernet frames) from a FR/ATM interface are supported. The present invention supports routed encapsulation from a FR/ATM interface.

Alternatively, if there are existing FR CE devices configured with routed encapsulation and it is not feasible to reconfigure the FR CE devices (to peer on a broadcast network instead of a point-to-point network), some of the FR CE and Ethernet CE devices can be connected to different subnets instead. Additional provisioning is required on routers for the different subnets.

### Summary of the Invention

The present invention provides methods and systems whereby standard IP devices can be connected to existing and heterogeneous access technologies so as to communicate with each other as if they were connected to a common LAN.

Therefore, in accordance with a first aspect of the present invention there is provided a method of using a virtual private LAN service (VPLS) to provide communications between IP devices connected to a provider service network (PSN) by a non-Ethernet access link and IP devices connected to the PSN by an Ethernet access link comprising the steps: discovering the MAC address of the non-Ethernet connected devices from an Ethernet connected site; discovering the MAC address of the Ethernet connected devices by a PE router connected to the non-Ethernet connected devices; and encapsulating traffic from Ethernet connected devices according to an Ethernet encapsulating protocol, and encapsulating traffic the non-Ethernet connected devices according to a non-Ethernet encapsulating protocol.

In accordance with a second aspect of the invention there is provided a system for using a virtual private LAN service (VPLS) to provide communications between IP devices connected to a provider service network (PSN) by a non-Ethernet access link and IP devices connected to the PSN by an Ethernet access link comprising: means for discovering the MAC address of the non-Ethernet connected devices from an Ethernet connected site; means for discovering the MAC address of the Ethernet connected devices by a PE router connected to the non-Ethernet connected devices; and means for encapsulating traffic from Ethernet connected devices according to an Ethernet encapsulating protocol, and encapsulating traffic the non-Ethernet connected devices according to a non-Ethernet encapsulating protocol.

### Brief Description of the Drawings

The invention will now be de scribed in greater detail with reference to the attached drawings wherein:
Figure 1 illustrates IP devices connected over multiple subnets;
Figure 2 illustrates IP devices connected over a broadcast network; and
Figure 3 shows an alternate embodiment of IP devices connected over a broadcast network.

### Detailed Description of the Invention

In the attached drawings a Provider Service Network (PSN) backbone is represented by the PSN cloud. Provider Equipment (PE) access the PSN via heterogeneous access technologies such as Ethernet over PSN or IP over PSN. Provider equipment is connected to Customer Equipment (CE) via diverse access technologies such as Ethernet, Frame Relay (FR) and Asynchronous Transfer Mode (ATM), the latter two also being described herein as non-Ethernet access technologies or point-to-point technologies.

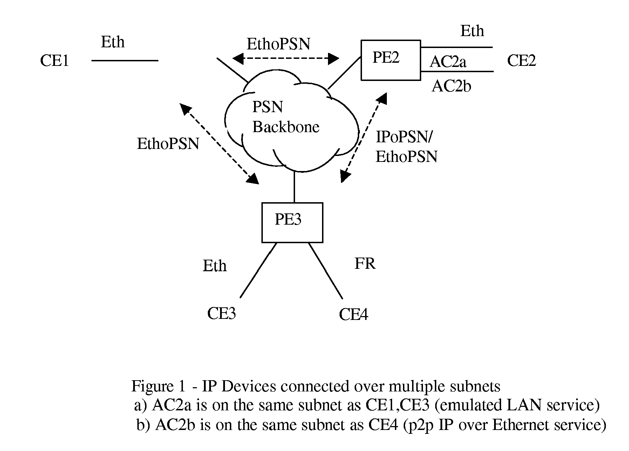

The systems and methods of the invention allow a CE with FR/ATM access to peer with a CE with Ethernet access over a different subnet than the emulated LAN used by CEs with Ethernet access, allowing an FR/ATM CE to maintain the existing configuration. Thus, in Figure 1 CE2 is connected to CE4 via a FR access link and both CE2 and CE4 are using a routed encapsulation. When CE2 access link is changed to Ethernet, two IP interfaces can be defined on the Ethernet interface, one for a VPLS connected to other Ethernet CE routers, the other is for a p2p link to CE4. No re-configuration or configuration change is required on CE4 in this case.

When the number of end customer sites is large, grouping sites into different subnets/emulated LAN would be a reasonable approach to scale the Virtual Private LAN or VPN design, while reducing the provisioning required by peering routers over multiple emulated LANs or VPLS.

The disadvantage with this configuration is that some CEs with Ethernet access would need to be configured to peer with multiple FR/ATM sites on separate subnets instead of with one subnet (as with other CEs with Ethernet sites), even for a VPN with a relatively smaller number of sites, as shown in Figure 1.

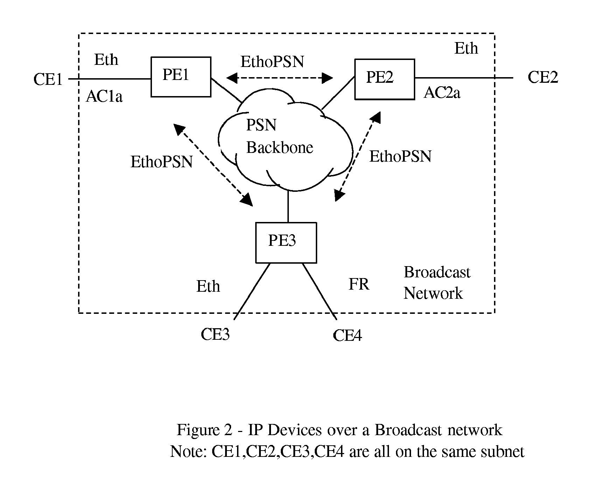

The following embodiment, as shown in Figure 2, overcomes this issue but requires configuration changes in CE routers. According to this embodiment all CEs are allowed to peer over the same emulated LAN or subnets, but require configuration changes on FR/ATM CEs routers (e.g. OSPF Interface Type is changed to broadcast mode). It allows CE devices which for whatever reason are not able to use bridged encapsulation instead of routed encapsulation, but desire to peer over the same emulated LAN, instead of over different subnets as in the previous case.

The following describes mechanisms required to achieve the aforementioned IP to VPLS interworking. These mechanisms can be provided by either PE3 or PE2. To simplify the explanation, only the case where PE3 is providing the IP to VPLS interworking functions is described.

The common problem for both cases is one end of the service is point-to-point in nature and the other end is a shared media, and there are no Ethernet names/addresses (as in bridged encapsulation) provided from the point-to-point end, when routed encapsulation is used. Further, it cannot be assumed that PE2 can only see one MAC node on AC2b. An Attachment Circuit, AC2b at the Ethernet end at CE2 (Figure 1), may have more than one CE router attached to it. CE2 may be a bridge and there may be more than one router connected to CE2 at the customer site.

To discover the MAC address of network address of CE4 router as shown in Figure 2, the following procedure takes place. The device sending the packet at Site 1 (CE1) shall use already defined specifications for the routed protocol. For e.g., CE1 will send an ARP request for CE4 router to the broadcast network via AC1a. PE3 will act as a Proxy ARP and respond with an assigned MAC address for CE4 IP address.

PE3 will be configured a priori with the network addresses of remote FR/ATM CEs or alternatively PE3 may use Inverse ARP to discover the IP address of the FR/ATM CE. At PE3, a local MAC address (not IEEE allocated) is allocated for each FR CE. This allows PE3 to respond to an ARP request for an FR CE with this assigned MAC address.

Next, the process of discovering the MAC address of a network device from an FR/ATM site will be described. To illustrate the problem to be solved, Fig 1 shows CE4 connected to the emulated LAN. Traffic from CE4 is routed encapsulated at the FR/ATM access link. Only the network address is available when the routed encapsulation traffic from CE4 is decapsulated at PE3.

PE3 needs to determine or learn the corresponding MAC address of the network address on the shared media end. It should be noted that there may be other MAC devices on the shared media end, on the same subnet as CE2. The same applies to the embodiment shown in Figure 2.

If the IP packet received is multicast, the corresponding MAC address can be derived from the IP multicast address.

If the packet is unicast there are two cases to be considered:
1) In the first case, if the packet is unicast and the corresponding MAC address for an IP address have been learned already via e.g. IGP hello sent by CE2 router prior to CE4 attempting to communicate directly with CE2, or IP packets routed by CE2 to CE4. In this case, PE3 learns the MAC address to send the IP packet to. The MAC address could be: - the device MAC address if the device is in the same subnet as the emulated LAN or - the MAC address of a router if the device is in a different subnet as the emulated LAN.
2) In the second case, PE3 sends an ARP request for the MAC address of the unknown unicast IP address on the VLPS. A CE responds with its MAC address. If it is a router, it is a Proxy ARP for other IP addresses it routes to. This method requires that the CE routers (at Ethernet sites) are Proxy ARP enabled. This Proxy ARP function is provided by a PE at an FR/ATM site.

Encapsulation of traffic from an Ethernet site is well known, for example, as defined in Internet Draft "draft-ietf-12vpn-vpls-Idp-0.5.txt" by Lasseurre and Vkompella.

For encapsulation of traffic from an FR/ATM site, PE3 will decapsulate/encapsulate the IP traffic from/to FR/ATM CE as defined in RFC2427/RFC1490 for FR or RFC2684/RFC1483 for ATM. PE3 will encapsulate/decapsulate traffic to other PEs as defined in the aforementioned document by Lasseurre and Vkompella.

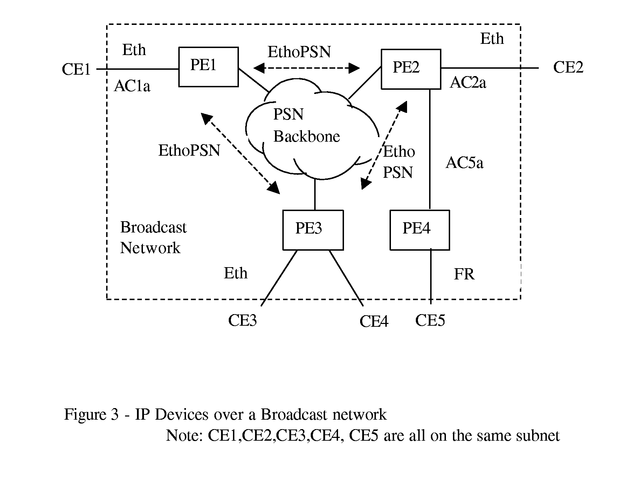

In some deployment, it may not be feasible to upgrade the FR/ATM PE device. In this case, the FR/ATM PE can be connected to a PE via an Attachment Circuit (AC) as shown in Figure 3. The FR/ATM PE is not part of the VPLS PE mesh. All the MAC discovery functions described for PE3 is now provided by PE2 instead.

PE4 merely relay IP frames from CE5 to PE2 and does not participate in VPLS functions. PE4 will decapsulate/encapsulate the IP traffic from/to FR/ATM CE5 as defined in above. PE4 will encapsulate/decapsulate traffic to PE2 as IP over PW or routed encapsulation also as defined above.

In summary, the present invention allows a site with FR/ATM interface to be included in a VPN/VPLS offered by a provider, reducing the costs and complication of extending VPLS to a remote FR/ATM site by a provider.

Although particular embodiments of the invention have been described and illustrated it will be apparent to one skilled in the art that numerous changes can be made without departing from the basic concept. It is to be understood, however, that such changes will fall within the full scope of the invention as defined by the appended claims.

## Claims

1. A method of using a virtual private LAN service (VPLS) to provide communications between IP devices connected to a provider service network (PSN) by a non-Ethernet access link and IP devices connected to the PSN by an Ethernet access link comprising the steps:
a) discovering the MAC address of the non-Ethernet connected devices from an Ethernet connected site;
b) discovering the MAC address of the Ethernet connected devices by a PE router connected to the non-Ethernet connected devices; and
c) encapsulating traffic from Ethernet connected devices according to an Ethernet encapsulating protocol, and encapsulating traffic the non-Ethernet connected devices according to a non-Ethernet encapsulating protocol.

2. The method as defined in claim 1 wherein the MAC address of the non-Ethernet device is discovered using an ARP request to a PE router connected to the non-Ethernet connected devices.

3. The method as defined in claim 2 wherein the PE router had been a priori configured with the network addresses of the non-Ethernet connected devices.

4. The method as defined in claim 2 wherein the PE router uses Inverse ARP to discover the IP addresses of the non-Ethernet connected devices.

5. The method as defined in claim 1 wherein the MAC address of the Ethernet connected devices for multicast packets is derived by the PE router from the IP multicast address.

6. The method as defined in claim 1 wherein the MAC address of the Ethernet connected devices for unicast packets may have already been learned by the PE router from received packets or an IGP hello message.

7. The method as defined in claim 6 wherein if the MAC address has not already been learned the PE router will consult an IP address to MAC address mapping table that it keeps.

8. The method as defined in claim 7 wherein the mapping the table aggregates IP addresses to the same MAC address into a shortest prefix.

9. The method as defined in claim 1 wherein the non-Ethernet access link is Frame Relay (FR).

10. The method as defined in claim 1 wherein the non-Ethernet access link is Asynchronous Transfer Mode (ATM).

11. A system for using a virtual private LAN service (VPLS) to provide communications between IP devices connected to a provider service network (PSN) by a non-Ethernet access link and IP devices connected to the PSN by an Ethernet access link comprising:
means for discovering the MAC address of the non-Ethernet connected devices from an Ethernet connected site;
means for discovering the MAC address of the Ethernet connected devices by a PE router connected to the non-Ethernet connected devices; and
means for encapsulating traffic from Ethernet connected devices according to an Ethernet encapsulating protocol, and encapsulating traffic the non-Ethernet connected devices according to a non-Ethernet encapsulating protocol.

12. The system as defined in claim 11 wherein the non-Ethernet access link is for Frame Relay (FR) technology.

13. The system as defined in claim 11 wherein the non-Ethernet access link is for Asynchronous Transfer Mode (ATM) technology.

14. The system as defined in claim 11 wherein the MAC address of the non-Ethernet device is discovered using an ARP request to a PE router connected to the non-Ethernet connected devices.

15. The system as defined in claim 14 wherein the PE router had been a priori configured with the network addresses of the non-Ethernet connected devices.

16. The system as defined in claim 14 wherein the PE router uses Inverse ARP to discover the IP addresses of the non-Ethernet connected devices.
